# EUROPEAN PATENT APPLICATION

(11) **EP 4 650 278 A1**
(43) Date of publication of application: **19.11.2025**
(21) Application number: 25174989.1
(22) Date of filing: 08.05.2025
(51) Int. Cl.: B64D 45/00

(54) **SYSTEM AND METHOD FOR MONITORING AND REDUCING AN AIRCRAFT EMISSION LEVEL**

(30) Priority: 13.05.2024 US 202418662081
(71) Applicant: The Boeing Company, Arlington, VA 22202 (US)
(72) Inventor: PIRADI, Prasad Rao, Arlington, 22202 (US); SINGH, Gurender, Arlington, 22202 (US); DEV, Viniil, Arlington, 22202 (US); KARJAGI, Mallikarjun B., Arlington, 22202 (US)
(74) Representative: Boult Wade Tennant LLP

(57) **Abstract**

A method for operating an aircraft to reduce an emission level. The method comprises monitoring an emission level of the aircraft during a flight. The method further comprises detecting that the emission level exceeds an emission level threshold. In addition, the method comprises changing one or more operational settings of the aircraft during the flight and reducing the emission level during the flight to below the emission level threshold.

## Description

### TECHNOLOGICAL FIELD

The present disclosure generally relates to the field of real-time monitoring of an aircraft and, more specifically, to monitoring the emission level of an aircraft during flight and changing one or more operational settings of the aircraft during the flight.

### BACKGROUND

Significant evolutions in aircraft, airspaces, and airport system design and operations have been driven by the rapid surge in air transport demand. With this, the number of flights is expected to greatly increase. With the increase in flights, aircraft emission is predicted to triple which poses an environmental issue. Standards including emission level thresholds have been established to protect the environment. The standards require that an aircraft operate with emission levels below an emission level threshold. An airline with an aircraft that operates above the emission level threshold may be penalized with a fine. In extreme cases of repeat violations, an airline may be prevented from operating within a particular airspace.

Current aircraft systems monitor the emission levels of aircraft. These systems usually include one or more sensors on the aircraft that detect the emission level of the engines. The emission level is analyzed after the flight is completed to ensure compliance with the emission standards. Airlines also use the emission level information in strategic planning for future flights.

A drawback of the current systems is the emission level is not monitored in real time. The emission level is not known until after the completion of the flight. If an aircraft is producing a high emission level, the issue is not addressed in real time to protect the environment and conform to the emission standards. Hence, there is a need to analyze an emission level during a flight to enable adjustments to be made to one or more operational settings of an aircraft to reduce the emission level during the flight.

### SUMMARY

One example is directed to a method of operating an aircraft to reduce an emission level. The method comprises: monitoring an emission level of the aircraft during a flight; determining that the emission level exceeds an emission level threshold; and changing one or more operational settings of the aircraft during the flight and reducing the emission level during the flight to below the emission level threshold.

The method may further comprise determining the emission level during one or more of take-off, climb, cruise, descent, and landing of the aircraft.

The method may further comprise receiving the emission level threshold from a remote node during the flight.

The emission level threshold value may be generated during the flight and based on the operational settings of the aircraft.

The operational settings of the aircraft may comprise one or more of engine settings and flight settings.

The method may further comprise responsive to determining that the emission level exceeds the emission level threshold, transmitting the emission level during the flight to a remote node.

The method may further comprise responsive to detecting that the emission level exceeds the emission level threshold, displaying a prompt to engage in an emission control mode that changes one or more operational settings to reduce the emission level during the flight.

Changing the one or more operational settings of the aircraft during the flight may comprise determining changing one or more of fuel burn, speed, thrust, and altitude of the aircraft.

The method may further comprise disabling an auxiliary power unit of the aircraft prior to monitoring the emission level of the aircraft during the flight.

The method may further comprise in response to determining that the emission level exceeds an emission level threshold providing an aural alert to the flight deck during the flight.

Another example is directed to a computing system to operate an aircraft to reduce an emission level during a flight. The computing system comprises processing circuitry and memory circuitry with the memory circuitry storing instructions executable by the processing circuitry whereby the computing system is configured to: detect an emission level of the aircraft during the flight; determine that the emission level exceeds an emission level threshold; and responsive to determining the emission level is elevated, activate an emission control mode during the flight and reduce the emission level below the emission level threshold.

An emission sensor may be onboard the aircraft and is configured to detect the emission level of the aircraft.

The computing system may detect the emission level during one or more of a plurality of flight phases comprising a taxi-out, take-off, climb, cruise, descent, landing, and taxi-in, and transmit to a remote node, the emission level during the flight phases.

The computing system may be configured to determine the emission level threshold based on operational settings of the aircraft.

The computing system may be further configured to transmit the emission level to a remote node responsive to a determination that the emission level is over the emission level threshold.

The computing system may be further configured to display a prompt comprising a selection of whether to engage in an emission control mode responsive to determining that the emission level is over an emission level threshold.

In response to determining that the emission level exceeds the emission level threshold, the computing system may be further configured to determine flight profiles that each comprise one or more adjustments to operational settings of the aircraft that result in reducing the emission level to below the emission level threshold.

The flight profiles may comprise the adjustments made to one or more of fuel burn, speed, thrust, and altitude of the aircraft.

The computing system may determine that an auxiliary power unit of the aircraft is disabled prior to detecting the emission level of the aircraft during the flight.

Another example is directed to a non-transitory computer-readable medium storing a computer program product with the computer program product comprising software instructions that, when ran on a computing device, cause the computing device to: operate the aircraft using a first flight profile; determine during flight an emission level of the aircraft that is operating according to the first flight profile; determine that the emission level exceeds an emission level threshold; generate one or more additional flight profiles with each of the additional flight profiles comprising different operational settings having an expected emission level that is below the emission level threshold; output the additional flight profiles; receive a response of a selection of one of the additional flight profiles; and operate the aircraft using the one additional flight profile.

The features, functions and advantages that have been discussed can be achieved independently in various examples or may be combined in yet other examples, further details of which can be seen with reference to the following description and the drawings.

### BRIEF DESCRIPTION OF THE DRAWINGS

Figure 1 is an isometric view of an aircraft.
Figure 2 is a schematic diagram of components of an aircraft.
Figure 3 is a schematic diagram of modules included with an onboard emission detection system.
Figures 4A-B are schematics of exemplary display screens on a flight deck including check engine emission indicators.
Figures 5A-C are graphs illustrating an active flight plan and an improved flight plan for an aircraft in a climb phase, cruise phase and decent phase.
Figure 6 is a flow diagram illustrating a method of determining that an emission level exceeds an emission level threshold.
Figure 7 is a flow diagram illustrating a method of outputting an alert in the event the detect emission level exceeds a threshold.
Figure 8 is a flow diagram illustrating a method of changing or more operational settings of an aircraft.
Figure 9 is a flow diagram illustrating a method of reducing the emission level of an aircraft.
Figure 10 is a schematic diagram of an onboard emission detection system.

### DETAILED DESCRIPTION

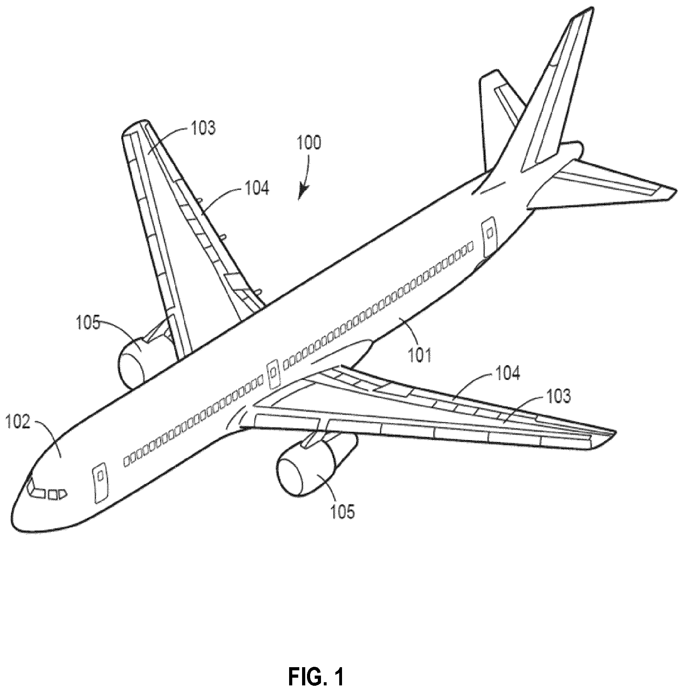

Figure 1 illustrates an aircraft 100 configured to transport passengers and/or cargo. The aircraft 100 generally includes a fuselage 101 with a flight deck 102 configured to accommodate flight personnel to control the flight. Engines 105 are mounted on the wings 103 that extend outward on opposing sides of the fuselage 101. Flight control members 104 such as flaps are positioned on the wings 103 to control the aircraft 100 during flight.

The systems and methods disclosed herein are applicable for use in a variety of different aircraft 100. Some examples include a commercial aircraft as illustrated in Figure 1 configured to transport persons and/or cargo. Some other examples include but are not limited to manned aircraft, unmanned aircraft, manned spacecraft, unmanned spacecraft, manned rotorcraft, unmanned rotorcraft, satellites, rockets, missiles, manned terrestrial vehicles, unmanned terrestrial vehicles, and combinations thereof. The various aircraft 100 can include a single engine 105 or multiple engines 105.

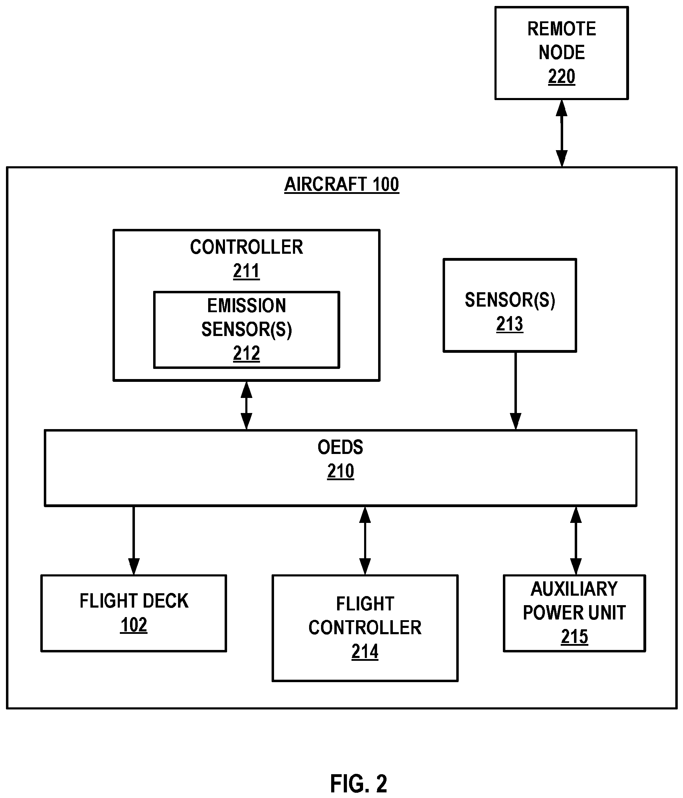

Figure 2 illustrates an Onboard Emission Detection System (OEDS) 210 that monitors an emission level of the aircraft 100. The OEDS 210 receives inputs from multiple different components of the aircraft 100. The inputs provide one or more operational settings of the aircraft 100 and/or emission outputs. Based on the inputs, the OEDS 210 is able to adjust one or more of the operational settings of the aircraft 100.

The operational settings of the aircraft 100 generally include engine settings and flight settings. Examples of engine settings include but are not limited to engine speed, thrust, fuel burn rate, air fuel ratio, emission control parameters and throttle positions. Examples of flight settings include but are not limited to aircraft weight, altitude, flight speed, flight path, flap positions, fuel predictions and trajectory predictions.

The OEDS 210 receives inputs from an engine controller 211. The engine controller 211 monitors and controls the operation of the engines 105. The engine controller 211 signals various inputs to the OEDS 210 regarding the engine settings. A flight controller 214 oversees the overall operation of the aircraft 100. The OEDS 210 obtains information from the flight controller 214 regarding the flight settings.

The OEDS 210 receives emission level data from one or more emission sensors 212. The emission sensors 212 can be positioned within the engines 105, such as attached to the aft section of an engine nacelle. Additionally or alternatively, emission sensors 212 are attached to the aircraft 100 aft of the engines 105. In some example, one or more emission sensors 212 are associated with each engine 105. In some other examples, an emission sensor 212 detects the emission from two or more of the engines 105. One or more sensors 213 detect one or more of the flight settings. Additionally or alternatively, flight aspects are received from one or both of the engine controller 211 and the flight controller 214.

The OEDS 210 is in communication with an auxiliary power unit 215 that provides electrical power to the aircraft 100 during certain times of operation. In some examples, the auxiliary power unit 215 provides power to one or more aircraft systems when the aircraft 100 is on the ground and the engines 105 are off. In some examples, auxiliary power unit 215 is disabled when the engines 105 are on (i.e., not in an idle state). In some examples, the OEDS 210 is enabled when the auxiliary power unit 215 is disabled, and disabled when the auxiliary power unit 215 is enabled.

The OEDS 210 also communicates with the flight deck 102. In some examples, the communications provide one or more operational settings or the emission level of the aircraft 100. The communications also enable the OEDS 210 to transmit an alert to the flight deck 102 in the event that the emission level exceeds an emission level threshold.

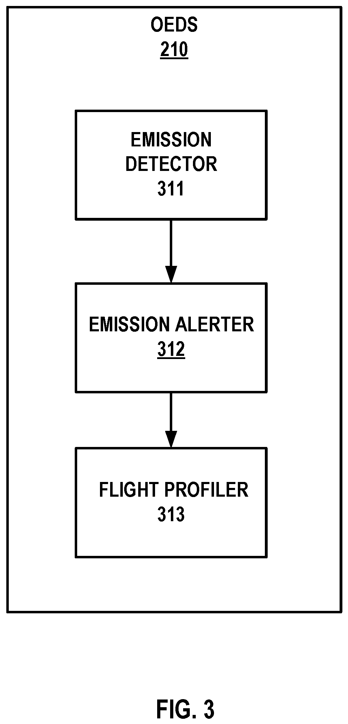

The OEDS 210 includes one or more modules or otherwise performs three main functions to monitor the emission level. As illustrated in Figure 3, the OEDS 210 includes an emission detector module 311. The emission detector module 311 monitors the emission level of the engines 105 and determines if the threshold is exceeded. In some examples, the emission detector module 311 continuously monitors the emission level from the engines 105. In other some examples, the emission level is periodically monitored with the frequency dependent upon how close the detected emission level is to the threshold.

The emission detector module 311 further determines the emission level threshold. In some examples, the emission level threshold is a predetermined amount that is accessed or stored at the OEDS 210. In some other examples, the emission level threshold is calculated based on one or more aspects of the flight such as but not limited to the geographic location, altitude, airspeed, and type of the aircraft. The emission detector module 311 compares the two amounts and determines whether the detected emission level exceeds the emission level threshold. If the detected level is below the threshold, the aircraft 100 continues to operate with the existing aircraft control aspects.

In the event the emission level exceeds the emission level threshold, the OEDS 210 enters an emission control mode during the flight. This mode generally includes transmitting an alert about the elevated emission level and taking corrective action to reduce the emission level of the aircraft 100.

The OEDS 210 includes an emission alerter module 312. If the detected emission level exceeds the threshold, the emission alerter module 312 outputs an alert. The alert is sent to the flight personnel onboard the aircraft 100, such as to the flight deck 102. In some examples, the alert is a message that is configured to be displayed on a display screen on the flight deck 102. Additionally or alternatively, the alert can be an audible alert broadcast in the flight deck 102.

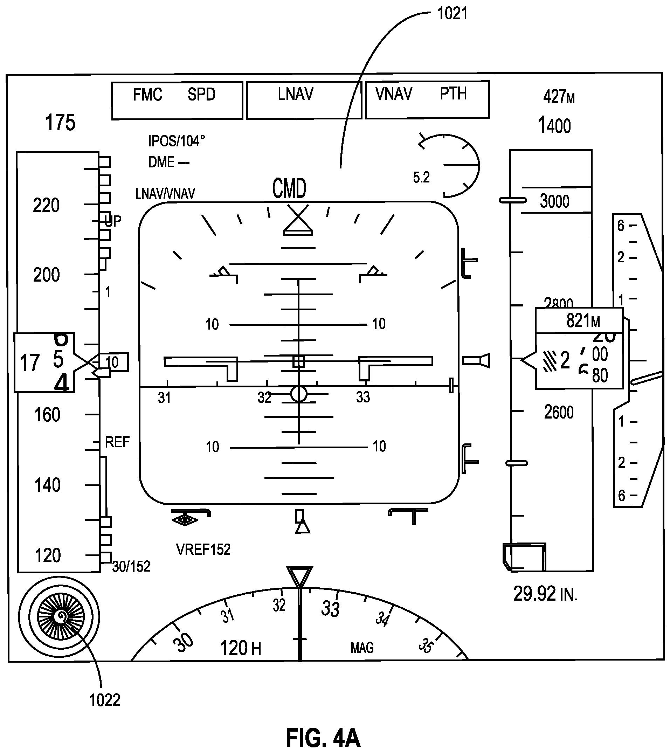

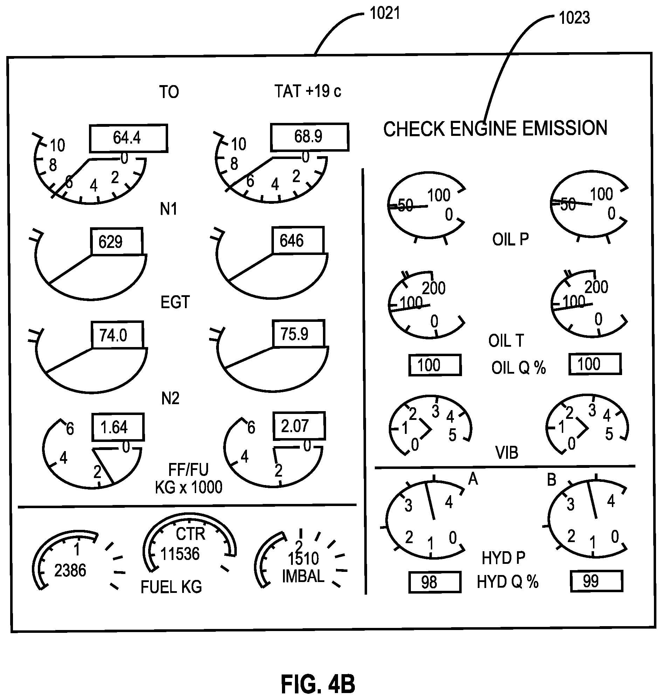

Figures 4A and 4B illustrate an exemplary display screen 1021 on a flight deck 102 including a check engine emission indicator (1022, 1023). The check engine emission indicator provided may be an icon, for example, a check engine emission icon 1022 illustrated in Figure 4A. In some other examples, the engine emission indicator may be a message such as the check engine emission message 1023 displayed on the display screen 1021 shown in Figure 4B. A check emission indicator appears on the display screen 1021 when the OEDS 210 detects an abnormal emission level for a particular phase of flight. The engine emission indicator may appear on one or more display screens 1021 in the flight deck 102.

A flight profiler module 313 determines adjustments to one or more of the operational settings of the aircraft 100. The flight profiler module 313 develops one or more flight profiles that include different operational settings. The flight profiles are determined to enable operation of the aircraft 100 below the emission threshold. In some examples, the flight profiles are predetermined and stored at the OEDS 210. Additionally or alternatively, the flight profiles are generated based on the operational settings of the aircraft 100 at the time the emission levels were detected. In some examples, the flight profiles are also generated based on the extent to which the detected emission level exceeds the threshold.

The one or more flight profiles are outputted to flight personnel. In some examples, the flight profiles are output to be displayed on a display screen on the flight deck 102. Flight personnel are able to review the options and select one of the flight profiles. The flight profiler module 313 then receives the selection and causes the applicable one or more changes to be made to the operational settings to operate in accordance with the selected flight profile.

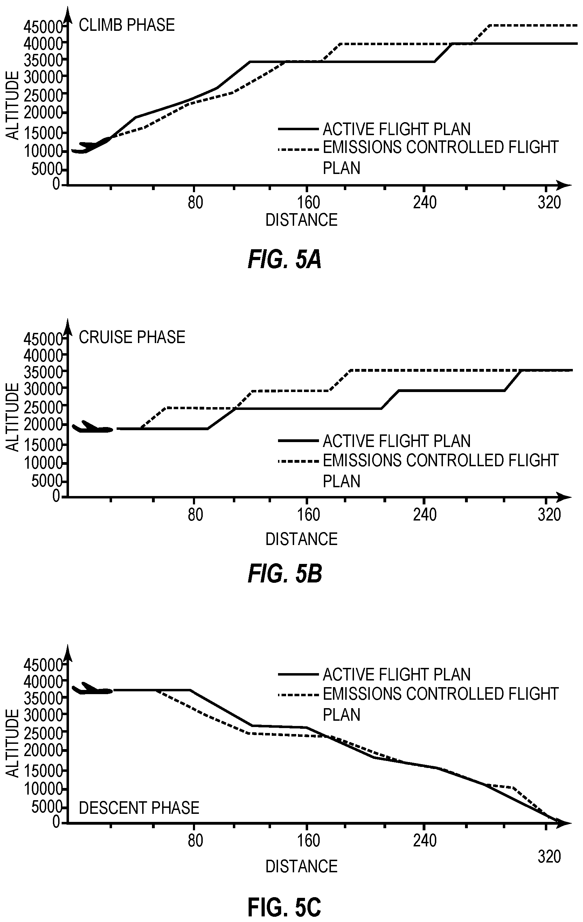

Figures 5A-C illustrate graphs of an active flight plan and an improved flight profile for an aircraft. In some examples, one or more of the graphs are displayed to assist in flight personnel to decide on the selection of a new profile. Additionally or alternatively, the graphs are displayed after the corresponding new flight profile has been selected. In some examples, the selected flight profile includes multiple phases of the flight (e.g., two or more of climb phase, cruise phase, and descent phase). In some other examples, the flight profile includes a single phase.

In some examples, the flight profiler module 313 determines the flight profiles after an excessive emission level is detected. In some other examples, the flight profiler module 313 determines flight profiles prior to detecting the elevated emission level. In some examples, the precalculation of the flight profiles enables presenting the flight profiles in a more timely manner thereby resulting in faster changes to the operational settings that reduce the emission level of the aircraft 100.

The monitoring of the emission level occurs during the flight. In some examples, the flight includes just the time when the aircraft 100 is in the air which includes take-off, climb, cruise, descent, and landing. In some other examples, the flight also includes the time that the aircraft 100 is on the ground and moving including taxiing out from a gate to the runway and taxiing in from the runway to a gate. In some examples, the monitoring of emission levels occurs during the entire flight. In some other examples, the emission monitoring occurs just at one or more phases of the flight such as during the cruise phase.

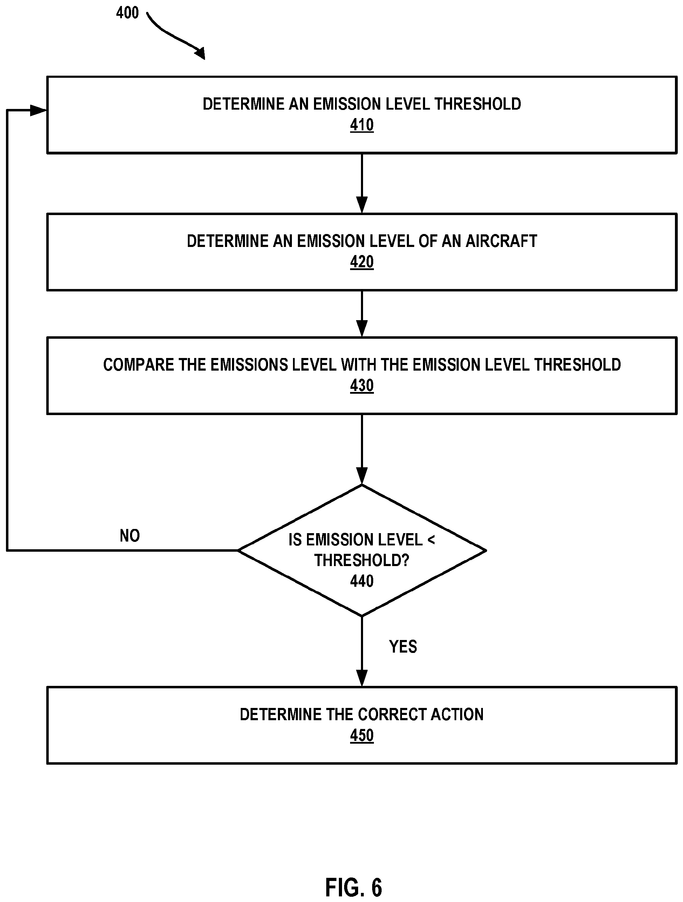

Figure 6 illustrates one method 400 of determining that an emission level exceeds an emission level threshold. The method includes determining the emission level threshold (block 410).

The method further includes determining an emission level of the aircraft 100 (block 420). The emission level is determined based on readings from emissions sensors 212. In some examples, the emission level is for the entire aircraft 100 and is calculated based on emission from the combination of engines 105. One specific example determines the emission level of the aircraft 100 based on the sum of the emission for each engine 105.

The emission level of the aircraft 100 and the emission level threshold are compared (block 430). If the emission level is less than the threshold (block 440), the monitoring process continues. If the emission level is above the threshold, corrective action is taken to address the elevated emission level (block 450).

In some examples, the monitoring process of method of Figure 4 occurs during the entire flight of the aircraft 100. This can include while the aircraft 100 is in the air (e.g., climb, cruise, descent). In some other examples, the monitoring process occurs during just one or more phases of the flight (e.g., cruise; climb, cruise, and descent; climb and descent).

In some examples, the OEDS 210 monitors the status of the auxiliary power unit 215. A disabled auxiliary power unit 215 indicates that the engines are on. The emission level monitoring occurs just during times when the auxiliary power unit 215 is disabled. An enabled auxiliary power unit 215 indicates that the engines 105 are off. Emission level monitoring is not necessary when the engines are off.

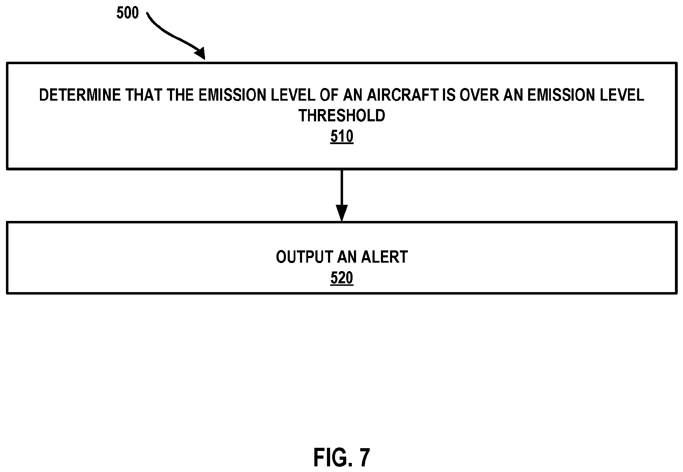

Figure 7 illustrates a method 500 of a corrective action taken by the OEDS 210 upon detecting an excessive emission level. The method includes determining that the emission level of an aircraft 100 is above the emission level threshold (block 510). In response to detecting the excessive emission level, an alert is output (block 520). In some examples, the alert is sent to one or more of the flight personnel on the aircraft 100. One example of an alert includes a message that is sent to the flight deck 102 which is displayed on a monitor screen. Another example of an alert is an audible indicator that is played through speakers on the flight deck 102. In some examples, the alert is sent just onboard the aircraft 100. Additionally or alternatively, the alert is transmitted off the aircraft to a remote node 220. Examples of remotes nodes 220 that receive the alerts include but are not limited to an airline and a regulatory agency (e.g., Federal Aviation Administration).

In some examples, the remote node 220 is an airline operations control (AOC) located on the ground. The AOC monitors the flight of the aircraft 100 including the emission level and any of the changes made to the operational settings. The AOC is presented with the alert and selects the additional flight profile that is used to operate the aircraft 100 to reduce the emission level.

In some examples, the remote node 220 is a cloud-based depository for flight data. The operational settings and emission level of the flight phases are logged and the real time emission data stored seamlessly to the cloud-based remote node 220. In some examples, monitoring and saving the emission data results in a reduction in carbon penalties.

The alert can include determining one or more flight profiles. The flight profiles change one or more of the current operational settings of the aircraft 100 that will result in a reduction of the emission level. The reduction causes the emission level to be below the threshold. The changes to the operational settings can occur to one or both of engine settings and flight settings. In some examples, the alert includes just the flight profiles. In some other examples, the alert includes the flight profiles in combination with one or more of the display and audible alarm.

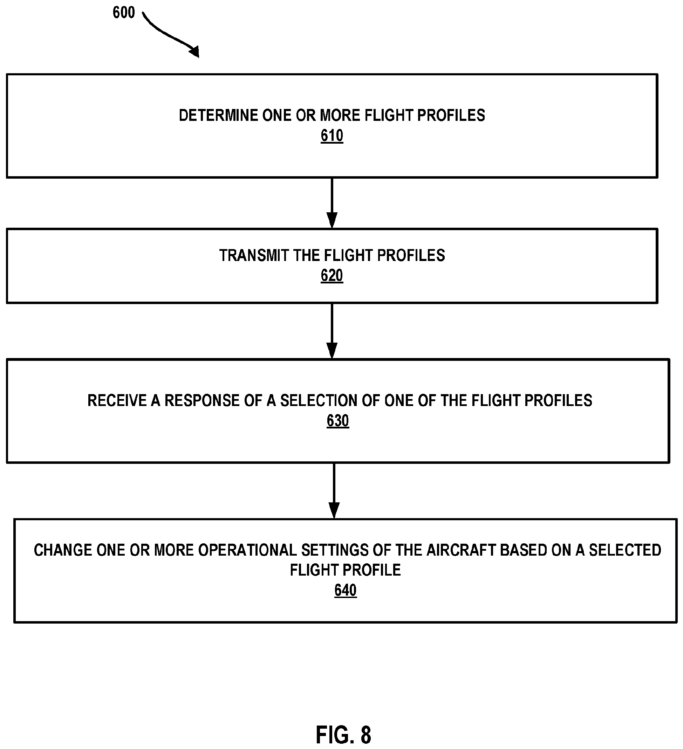

Figure 8 illustrates a method 600 of changing the operational settings of an aircraft 100. This occurs after a determination of emission level above the threshold. The method includes determining one or more flight profiles (block 610). In some examples, the flight profiles are predetermined and saved in the OEDS 210. These predetermined adjustments are based on expected flight plans for the aircraft 100 and/or adjustments that have been made in other situations for the same type of aircraft 100 and/or the same flight. In some other examples, the determination of the flight profiles includes generating flight profiles in response to determining the excessive emission level. The generated flight profiles are calculated based on one or more of the current operational settings of the aircraft 100. In some examples, the flight profiles include the expected amount of reduction of the emission level that should occur by implementing the one or more changes of the flight profile.

The method further includes transmitting the flight profiles (block 620). In some examples, the flight profiles are transmitted to the flight deck for consideration by one or more of the flight personnel. The flight profiles can also be transmitted to other locations on the aircraft 100 as necessary. Additionally or alternatively, the flight profiles are transmitted to one or more remote nodes 220.

A response is then received that includes a selection of one of the flight profiles (block 630). Upon receiving the selection, the corresponding one or more changes to the operational settings are made to the aircraft 100 to reduce the emission level (block 640). In some examples, the OEDS 210 makes the one or more changes to the operational settings. In some other examples, the OEDS 210 signals the one or more changes to the flight controller 214 and/or the engine controller 211 that makes the changes.

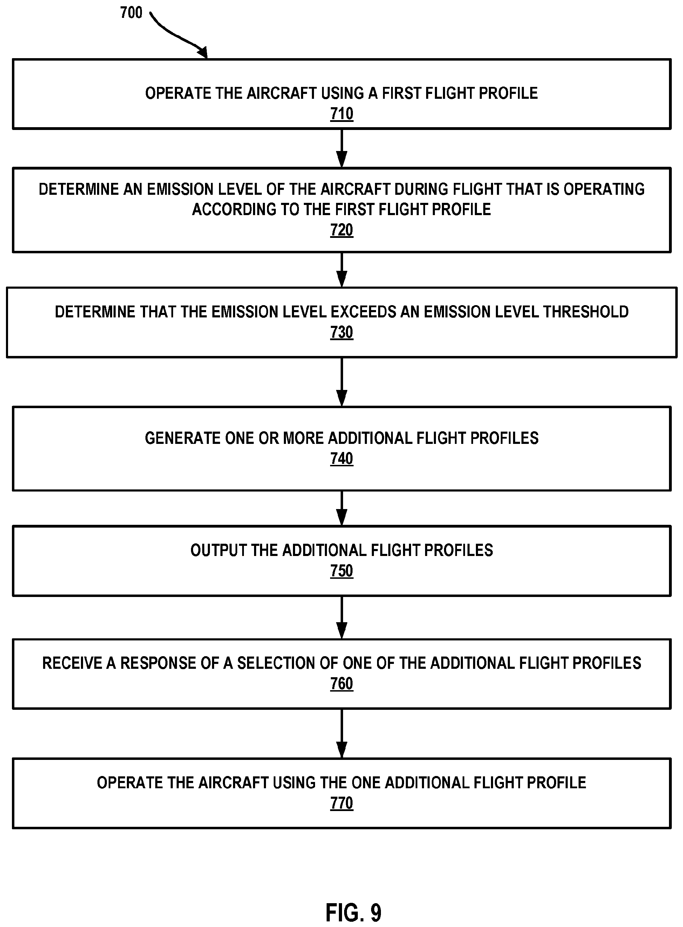

Figure 9 illustrates another method 700 of monitoring the emission level of an aircraft 100. The aircraft 100 is operated during the flight according to a first flight profile (block 710). The emission level of the aircraft 100 is monitored during the flight while operating according to the first flight profile (block 720). During the flight, the OEDS 210 determines that the emission level exceeds a threshold (block 730). In response to the excessive emission level, the OEDS 210 determines one or more additional flight profiles (block 740). The additional flight profiles each include one or more different operational settings and are determined to result in an emission level that is below the threshold. The additional flight profiles are output by the OEDS 210 (block 750). A response is received indicating a selection of one of the additional flight profiles (block 760). The operational settings of the aircraft 100 are operated according to the selected additional flight profile (block 770). The change to the additional flight profile results in the aircraft 100 operating below the emission threshold.

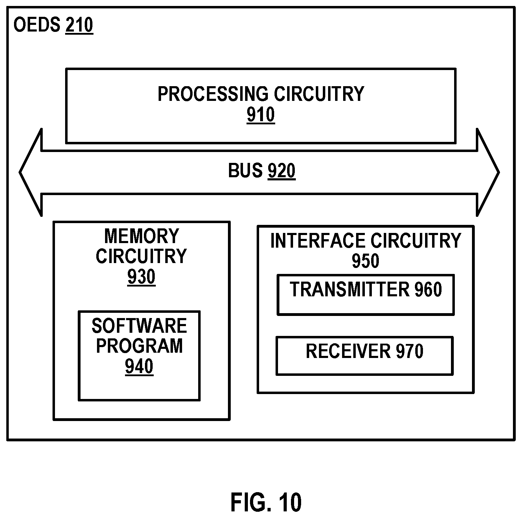

Figure 10 is a schematic block diagram illustrating an exemplary OEDS 210. The OEDS 210 includes processing circuitry 910, memory circuitry 930, and interface circuitry 950. The processing circuitry 910 is communicatively coupled to the memory circuitry 930 and the interface circuitry 950, e.g., via one or more buses 920. The processing circuitry 910 includes one or more microprocessors, microcontrollers, hardware circuits, discrete logic circuits, hardware registers, digital signal processors (DSPs), field-programmable gate arrays (FPGAs), application-specific integrated circuits (ASICs), or a combination thereof. In some examples, the processing circuitry 910 is programmable hardware capable of executing a software program 940 stored, e.g., as a machine-readable computer program 940 in the memory circuitry 930.

The memory circuitry 930 includes non-transitory machine-readable media, whether volatile or non-volatile, including but not limited to solid state media (e.g., SRAM, DRAM, DDRAM, ROM, PROM, EPROM, flash memory, solid-state drive, etc.), removable storage devices (e.g., Secure Digital (SD) card, miniSD card, microSD card, memory stick, thumb-drive, USB flash drive, ROM cartridge, Universal Media Disc), fixed drive (e.g., magnetic hard disk drive), or the like, wholly or in various combination.

In some examples, the interface circuitry 950 is a controller hub configured to control the input and output (I/O) data paths of the OEDS 210. Such I/O data paths may include data paths for exchanging signals over a communications network and data paths for exchanging signals with an electronic device or a user. For example, interface circuitry 950 includes a transceiver configured to send and receive communication signals over one or more of a cellular network, Ethernet network, or optical network. In some examples, the interface circuitry 950 includes (or is communicatively connected to) one or more of a graphics adapters, display port, video bus, touchscreen, graphical processing unit (GPU), display port, Liquid Crystal Display (LCD), and Light Emitting Diode (LED) display, for presenting visual information to a user. In some examples, the interface circuitry 950 includes one or more of a pointing device (e.g., a mouse, stylus, touchpad, trackball, pointing stick, joystick), touchscreen, microphone for speech input, optical sensor for optical recognition of gestures, and keyboard for text entry. In some examples, the OEDS 210 includes a combination of sensors, including one or more camera, device sensors, scanners, and one or more displays, audio devices (i.e., speakers), I/O devices, scanners, illumination sources, and/or near-field receivers, either as part of the interface circuitry 950 or communicatively connected to it.

The interface circuitry 950 may be implemented as a unitary physical component or as a plurality of physical components that are contiguously or separately arranged, any of which may be communicatively coupled to any other or may communicate with any other via the processing circuitry 910. In some examples, the interface circuitry 950 includes output circuitry (e.g., transmitter 960 configured to send communication signals over the communications network) and input circuitry (e.g., receiver 970 configured to receive communication signals over the communications network and or a device sensor network). Similarly, the output circuitry may include a display, whereas the input circuitry may include a keyboard, touch screen, or card reader. Some other examples, permutations, and arrangements of the above and their equivalents will be readily apparent to those of ordinary skill. The interface circuitry 950 is further configured to communicate with the one or more remote nodes 220.

Some other examples include a computing system (OEDS e.g., 210) for operating an aircraft to reduce emission levels with the computing system including processing circuitry 910 and memory circuitry 930. The memory circuitry 930 stores instructions (e.g., software program 940) executable by the processing circuitry 910 whereby the computing system 210 is configured to perform any of the methods disclosed herein.

Some other examples include a non-transitory computer-readable medium (e.g., the memory circuitry 930) storing a computer program that includes software instructions that, when run on processing circuitry 910 cause the OEDS 210 to perform any of the methods disclosed herein.

In some examples, a non-transitory computer-readable medium (e.g., the memory circuitry 930) stores a computer program product (e.g., software program 940) with the computer program product 904 including software instructions that, when run on a computing device (OEDS e.g., 210), cause the computing device 210 to perform any of the methods disclosed herein.

In some examples as illustrated in Figure 2, the OEDS 210 is a separate system that communicates with one or more other systems on the aircraft. In some other examples, the functionality of the OEDS 210 is incorporated into another aircraft system (e.g., engine control system 211). In other examples, the functionality of the OEDS 210 is incorporated into a flight controller 214 that oversees the operation of the aircraft.

In some examples, the OEDS 210 monitors an overall emission level of the aircraft 100 which is determined based on the emission from each of the engines 105. The aircraft 100 overall has a total emission output that is compared to the emission threshold. Additionally or alternatively, the OEDS 210 individually monitors the emission level of each engine 105 and each engine is individually compared to a threshold. One or more of the engines 105 may exceed the emission threshold while other ones of the engines 105 are below the threshold. The individual engines 105 that exceed the threshold are then adjusted in the event the engine 105 is operating above the emission threshold.

The present disclosure may, of course, be carried out in other ways than those set forth herein without departing from essential characteristics of the present disclosure. The present examples are to be considered in all respects as illustrative and not restrictive, and all changes coming within the meaning of the appended claims are intended to be embraced therein. Although steps of various processes or methods described herein may be shown and described as being in a sequence or temporal order, the steps of any such processes or methods are not limited to being carried out in any particular sequence or order, absent an indication otherwise. Indeed, the steps in such processes or methods generally may be carried out in various sequences and orders while still falling within the scope of the present disclosure.

While the concepts of the present disclosure are susceptible to various modifications and alternative forms, specific exemplary features of the disclosure have been shown by way of example in the drawings and are described in detail herein. It should be understood, however, that there is no intent to limit the concepts of the present disclosure to the particular forms disclosed.

The following clauses present further examples:
Clause 1. A method of operating an aircraft (100) to reduce an emission level, the method comprising:
   monitoring an emission level of the aircraft (100) during a flight;
   determining that the emission level exceeds an emission level threshold; and
   changing one or more operational settings of the aircraft (100) during the flight and reducing the emission level during the flight to below the emission level threshold.
Clause 2. The method of Clause 1, further comprising determining the emission level during one or more of take-off, climb, cruise, descent, and landing of the aircraft (100).
Clause 3. The method of Clause 1 or Clause 2, further comprising receiving the emission level threshold from a remote node (220) during the flight.
Clause 4. The method of any preceding Clause, wherein the emission level threshold value is generated during the flight and based on the operational settings of the aircraft (100).
Clause 5. The method of Clause 4, wherein the operational settings of the aircraft (100) comprises one or more of engine settings and flight settings.
Clause 6. The method of any preceding Clause, further comprising responsive to determining that the emission level exceeds the emission level threshold, transmitting the emission level during the flight to a remote node (220).
Clause 7. The method of any preceding Clause, further comprising responsive to detecting that the emission level exceeds the emission level threshold, displaying a prompt to engage in an emission control mode that changes one or more operational settings to reduce the emission level during the flight.
Clause 8. The method of any preceding Clause, wherein changing the one or more operational settings of the aircraft (100) during the flight comprises determining changing one or more of fuel burn, speed, thrust, and altitude of the aircraft (100).
Clause 9. The method of any preceding Clause, further comprising monitoring the emission level of the aircraft when one or more engines are operating and an auxiliary power unit (215) is not operating.
Clause 10. The method of any preceding Clause, further comprising in response to determining that the emission level exceeds an emission level threshold providing an aural alert to a flight deck (102) during the flight.
Clause 11. A computing system (210) to operate an aircraft (100) to reduce an emission level during a flight, the computing system comprising:
   processing circuitry (910) and memory circuitry (930), the memory circuitry (930) storing instructions (940) executable by the processing circuitry (910) whereby the computing system (210) is configured to:
      detect an emission level of the aircraft (100) during the flight;
      determine that the emission level exceeds an emission level threshold; and
      responsive to determining the emission level is elevated, activate an emission control mode during the flight and reduce the emission level below the emission level threshold.
Clause 12. The computing system (210) of Clause 11, wherein an emission sensor (212) is onboard the aircraft (100) and is configured to detect the emission level of the aircraft (100).
Clause 13. The computing system (210) of Clause 11 or Clause 12, wherein the computing system (210) detects the emission level during one or more of a plurality of flight phases comprising a taxi-out, take-off, climb, cruise, descent, landing, and taxi-in, and transmit to a remote node, the emission level during the flight phases.
Clause 14. The computing system (210) of any of Clauses 11 - 13, wherein the computing system (210) is configured to determine the emission level threshold based on operational settings of the aircraft (100).
Clause 15. The computing system (210) of any of Clauses 11 - 14, wherein the computing system (210) is further configured to transmit the emission level to a remote node responsive to a determination that the emission level is over the emission level threshold.
Clause 16. The computing system (210) of any of Clauses 11 - 15, wherein the computing system (210) is further configured to display a prompt comprising a selection of whether to engage in an emission control mode responsive to determining that the emission level is over an emission level threshold.
Clause 17. The computing system (210) of any of Clauses 11 - 16, wherein the computing system (21) is further configured to in response to determining that the emission level exceeds the emission level threshold, determine flight profiles that each comprise one or more adjustments to operational settings of the aircraft (100) that result in reducing the emission level to below the emission level threshold.
Clause 18. The computing system (210) of Clause 17, wherein the flight profiles comprise the adjustments made to one or more of fuel burn, speed, thrust, and altitude of the aircraft (100).
Clause 19. The computing system (210) of any of Clauses 11 - 18, wherein the computing system (210) determines that an auxiliary power unit (215) of the aircraft (100) is disabled prior to detecting the emission level of the aircraft (100) during the flight.
Clause 20. A non-transitory computer-readable medium storing a computer program product, the computer program product comprising software instructions (940) that, when run on a computing device (210), cause the computing device (210) to:
   operate the aircraft (100) using a first flight profile;
   determine during flight an emission level of an aircraft (100) that is operating according to the first flight profile;
   determine that the emission level exceeds an emission level threshold;
   generate one or more additional flight profiles with each of the additional flight profiles comprising different operational settings having an expected emission level that is below the emission level threshold;
   output the additional flight profiles;
   receive a response of a selection of one of the additional flight profiles; and
   operate the aircraft using the one additional flight profile.
Clause 21. An aircraft (100) comprising the computing system (210) of any of Clauses 11 - 19.

## Claims

1. A method of operating an aircraft (100) to reduce an emission level, the method comprising:
monitoring an emission level of the aircraft (100) during a flight;
determining that the emission level exceeds an emission level threshold; and
responsive to determining that the emission level exceeds the emission level threshold, changing one or more operational settings of the aircraft (100) during the flight and reducing the emission level during the flight to below the emission level threshold.

2. The method of claim 1, further comprising determining the emission level during one or more of a taxi-out, take-off, climb, cruise, descent, landing, and taxi-in of the aircraft (100).

3. The method of claim 1 or claim 2, further comprising receiving the emission level threshold from a remote node (220) during the flight.

4. The method of any preceding claim, wherein the emission level threshold is generated during the flight and based on the one or more operational settings of the aircraft (100), and optionally,
wherein the one or more operational settings of the aircraft (100) comprise one or more of engine settings and flight settings.

5. The method of any preceding claim, further comprising, responsive to determining that the emission level exceeds the emission level threshold, transmitting the emission level during the flight to a remote node (220).

6. The method of any preceding claim, further comprising, responsive to determining that the emission level exceeds the emission level threshold, displaying a prompt to engage in an emission control mode that changes the one or more operational settings of the aircraft (100) to reduce the emission level during the flight.

7. The method of any preceding claim, wherein changing the one or more operational settings of the aircraft (100) during the flight comprises changing one or more of fuel burn, speed, thrust, and altitude of the aircraft (100).

8. The method of any preceding claim, further comprising:
monitoring the emission level of the aircraft when one or more engines of the aircraft (100) are operating and an auxiliary power unit (215) of the aircraft (100) is not operating; and/or
determining that the auxiliary power unit (215) of the aircraft (100) is disabled prior to monitoring the emission level of the aircraft (100) during the flight.

9. The method of any preceding claim, further comprising, in response to determining that the emission level exceeds the emission level threshold:
providing an aural alert to a flight deck (102) of the aircraft (100) during the flight; and/or
activating an emission control mode during the flight and reducing the emission level below the emission level threshold.

10. The method of any preceding claim, further comprising, in response to determining that the emission level exceeds the emission level threshold, determining flight profiles that each comprise one or more adjustments to the one or more operational settings of the aircraft (100) that result in reducing the emission level to below the emission level threshold, and optionally,
wherein the flight profiles comprise the adjustments made to one or more of fuel burn, speed, thrust, and altitude of the aircraft (100).

11. The method of any preceding claim, wherein:
the monitoring the emission level of the aircraft (100) during the flight comprises:
operating the aircraft (100) using a first flight profile; and
determining, during the flight, the emission level of the aircraft (100) that is operating according to the first flight profile; and
the changing the one or more operational settings of the aircraft (100) during the flight and reducing the emission level during the flight to below the emission level threshold comprises:
generating one or more additional flight profiles, with each of the one or more additional flight profiles comprising different operational settings having an expected emission level that is below the emission level threshold;
outputting the one or more additional flight profiles;
receiving a response of a selection of one of the one or more additional flight profiles; and
operating the aircraft (100) using the selected one of the one or more additional flight profiles.

12. A computing system (210) configured to operate an aircraft (100) to reduce an emission level during a flight, the computing system comprising:
processing circuitry (910) and memory circuitry (930), the memory circuitry (930) storing instructions (940) executable by the processing circuitry (910) whereby the computing system (210) is configured to carry out the method of any preceding claim.

13. A non-transitory computer-readable medium storing a computer program product, the computer program product comprising software instructions (940) that, when run on a computing device (210), cause the computing device (210) to carry out the method of any of claims 1 - 11.

14. An aircraft (100) comprising the computing system (210) of claim 12.

15. The aircraft (100) of claim 14, further comprising an emission sensor (212) onboard the aircraft (100), the emission sensor (212) configured to detect the emission level of the aircraft (100).
